# EUROPEAN PATENT SPECIFICATION

(11) **EP 3 931 478 B1**
(45) Date of publication and mention of the grant of the patent: **30.08.2023**
(21) Application number: 20703302.8
(22) Date of filing: 03.02.2020
(51) Int. Cl.: F16L 9/12, F16L 9/16, F16L 58/10, F16L 58/16, B29C 65/00, B29C 63/10, F16L 11/08

(54) **METHOD OF PROVIDING REINFORCED PLASTIC PIPES AND RESULTING PRODUCTS**
VERFAHREN ZUR HERSTELLUNG VON VERSTÄRKTEN KUNSTSTOFFROHREN UND SO HERGESTELLTE PRODUKTE
PROCÉDÉ DE FOURNITURE DE TUYAUX EN PLASTIQUE RENFORCÉ ET PRODUITS OBTENUS

(30) Priority: 01.02.2019 NL 2022499
(43) Date of publication of application: 05.01.2022
(73) Proprietor: IFLEX LIMITED W.L.L., Sea Front, Manama (BH)
(72) Inventor: NEWBERT, John Joseph, 78740 Vaux-sur-Seine (FR); ALMEKHLAFI, Omar, Manama (BH)
(74) Representative: Arnold & Siedsma
(86) International application number: PCT/IB2020/050830
(87) International publication number: WO 2020/157732

(56) References cited:
- WO-A1-2012/118378
- WO-A2-2015/085328
- FR-A- 1 181 866
- US-A1- 2013 149 491

## Description

The present disclosure relates to reinforced plastic pipes, as well as productions thereof.

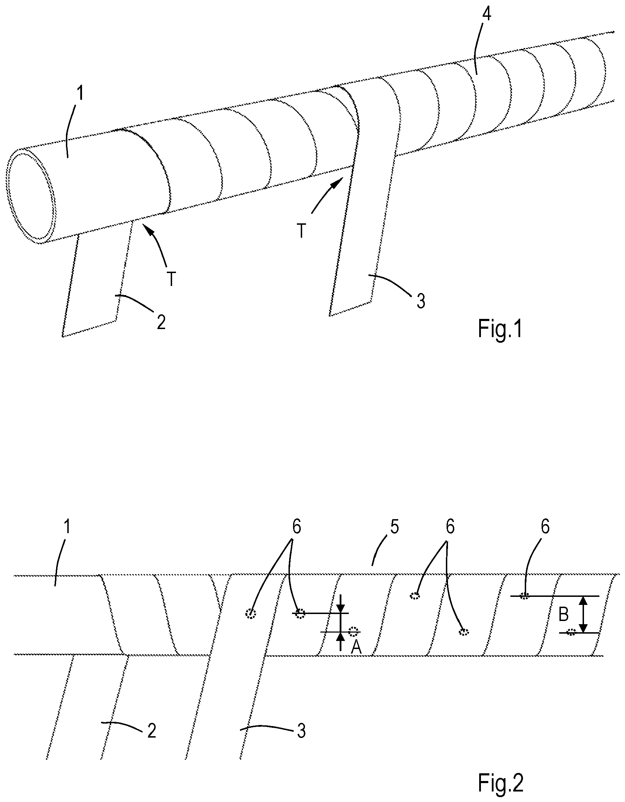

According to prior techniques, as shown in figure 1, reinforced plastic pipes are known to have been produced by providing a plastic pipe 1 and wrapping at least one tape 2, 3 onto the outer surface of the provided plastic pipe while welding the first tape onto the pipe 1 and welding subsequent tape layers onto underlying tape layers. Welding was performed over the entire contact surface between pipe 1 and the first arranged tape layer 2, and between any subsequent tape layer 3 and an underlying tape layer 2. In figure 1, only the first tape layer 2 and the second tape layer 3 are shown, and as a consequence, the representation of figure 1 is a simplification of the actual prior technique, which required the application of a plurality of tape layers, for example, 10 or even more, but the present disclosure is by no means restricted to any number of tape layers. Nevertheless, by applying a plurality of tape layers in quick succession, a proper adhesion, weld or fusion was sought, but resulted also in heating of the pipe 1 for successive adhesion, welding or fusion of the tape layers 2, 3 over the pipe 1 and over each other. This heating of pipe 1 during subsequent adhesion, welding or fusion steps to apply successive tape layers, involving considerable heating of the tapes 2, 3 to be applied over the full length and width thereof, has detrimental effects on the resulting product of the pipe 1 and the tape layers 2, 3 applied thereon.

As an example of the prior technique, in accordance with figure 1, first generation reinforced plastic pipes were produced about applying a very limited number of tape layers onto pipe 1, for instance, two tape layers 2, 3, which were wound, respectively, clockwise and anticlockwise onto the pipe 1 or an underlying tape layer 2.

Soluforce (Pipelife 1996) deployed relatively thick polyethylene tape with a reinforcement of aramid fibers. By deploying relatively thick polyethylene tape, desired characteristics or properties of the resulting product were, for example, thermal insulation, or the like. Using a heater, the aramid fiber reinforced polyethylene tape was heated over the entire contact surface thereof for welding or fusion thereof with the pipe 1 or underlying tape layer 2. In this manner, subsequently, tape layers were heated, and by winding onto the pipe 1 or the underlying tape layer 2 in alternating lay clockwise and anticlockwise orientations, the tape layers were welded or fused onto the pipe 1 or underlying tape layer 2. After applying the relatively small number of relatively thick tape layers, a protective coating 4 was applied.

However, a problem of such a technique is that the relatively thick polyethylene tape with aramid fiber reinforcement took a considerable time to be sufficiently heated and fused either to the pipe 1 or an underlying tape layer 2. Consequently, the process throughput time was considered insufficient, because the process was too slow. Moreover, as a further disadvantage of the prior technique, aramid fiber reinforced polyethylene tape proved to be far too expensive to result in a commercially and technically viable product. Consequently, developments turned to glass fiber reinforced tapes, which are much thinner and more easily heated for welding or fusion onto pipe 1 or an underlying tape layer 2.

At present, a number of heating methods are deployed for welding or fusion of glass fiber reinforced tapes onto pipes 1 or underlying tape layers 2. There among, it is known to deploy a laser, which is highly accurate, but still very expensive to acquire and maintain operational in an industrial, continuous process. As a further known heater, infrared heat sources are also deployed, which are less expensive to acquire, but have proven to be for a less accurate than a laser. As a third exemplary known method, hot air is also deployed for welding or fusion of tape layers, which is even cheaper to acquire, but even less accurate. In all instances of these known methods for heating tape to weld or fuse tape layers in reinforced plastic pipes, manufacturers have sought to weld or fuse tape layers onto a pipe or underlying tape layers by heating the entire, full contact surface of tape layers to be applied and an underlying outer surface of the pipe 1 or underlying tape layers 2.

Through the replacement of the first generation aramid fiber reinforced polyethylene tape with much thinner and more easily welded glass fiber reinforced tapes, a much higher number of tape layers is required to achieve a desired property or characteristic, such as a desired thermal insulation of the RTP resulting from the process. An exemplary glass fiber reinforced tape has a thickness of, for instance, 0,25mm, which is only a fraction of the thickness of the aramid fiber reinforced polyethylene tape first generation reinforced plastic pipes. As a consequence, for application of a much higher number of subsequently applied tape layers of glass fiber reinforced tapes, a much higher number of successive heating steps needs to be performed, than just the two heating steps for the first generation reinforced plastic pipes having two aramid fiber reinforced polyethylene tapes. As a consequence, during the production process of the later-generation reinforced plastic pipes with glass fiber reinforced tapes, heating of the basic plastic pipe has unexpectedly proven to be a problem. Depending on material properties of the basic pipe 1, when heated, the basic plastic pipe 1 may expand or become smaller, as the temperature thereof increases. As a consequence, more or less length of later applied tape layers 2, 3 is required to cover a unit axial length of the reinforced plastic pipe, in deviation from normal increase of such a length as a consequence of an increasing thickness of the reinforced plastic pipe during production, resulting from application of successive tape layers. Such a deviation in the normal increase of such a length of tape for tape layers, results in irregularities of the achieved load pattern in the configuration of the successive tape layers. After cooling of manufactured reinforced plastic pipes, tape layers have proven prone to coming loose, blathering, tearing, and the like. It should be noted here, that a number of glass fiber reinforced tape layers is calculated on the basis of resulting property or characteristic of the RTP, in light of a desired mechanical strength. When one of the tape layers succumbs to an excessive tension force, comes loose or bladders and tears, other tape layers are no longer in assembly capable of achieving the desired mechanical strength, and will also succumb and fail, resulting in an utterly useless product.

In addition to or as an alternative for the above acknowledged prior art, reference is made here to WO-2015/085 328, which discloses a plastic pipe with two layers, which are subsequently wound helically around the pipe. Further provided is an outer extruded flexible tube. The layers are metal wire mesh layers, which are free floating between the pipe on the inside and the tube on the outside to provide good flexibility of the entire tube. As an option, the metal wire mesh layer may be attached to itself, in particular adhered to an adjacent turn of the helically wound wire mesh layer, to the underlying pipe or to the overlying tube, or to another helically wound wire mesh layer, by spot glue attachments, or - altenatively - spot soldering, spot welding, ultrasonic heating, or some combination thereof. This may, for instance, help maintain the helical structure particularly in longer lengths of tubing.

Further, FR-1 181 866 is acknowledged here, which discloses a core pipe of undisclosed material, around which a single plastic band is helically wound and line or strip welded using a weld wheel, while longitudinally conveying and simultaneously rotating the core pipe with helically wound plastic tape thereon along the weld wheel, to obtain a helical weld line or weld strip. A protective layer of for example a plastic is then helically wound over the plastic tape that is welded to the core pipe of undisclosed material.

The inventors of the present disclosure have sought to address the above mentioned and/or other issues and problems of the prior art reinforced plastic pipes, by proposing local or discrete welding or fusion of plastic tape layers on a plastic core pipe. This is to say, that not the entire contact surface of each tape to be applied for forming a tape layer is needed for welding/fusion of the tape to the plastic core pipe or an underlying tape layer, but weld or fusion lines or spots or other discrete welds or fusions are defined to avoid having to weld or fuse each tape layer over the entire contact surface thereof or in discrete points or lines to an underlying plastic core pipe or underlying tape layer, after having helically wound each newly wound layer onto the pipe or an underlying layer. A method according to the present disclosure, therefore, involves partially welding not each applied tape individually after having wound each tape layer, but after winding a number of tapes for forming successive tape layers, thereafter jointly spot or strip welding the wound tape layers. Any variation is conceivable, and will be considered an embodiment of the present disclosure, as long as not all tapes to be applied are fused or welded over the entire contact thereof with the pipe or tape layer underneath, and a plurality of tape layers is welded partially over less than the entire surface thereof and jointly after having wound a number of tapes for forming successive tape layers. Consequently, as a main advantage of the present disclosure, the aforementioned problems in relation to deficient products have been overcome, at least partially, but moreover investments for acquiring the necessary machinery has been lowered considerably.

The partial weld may comprise at least one weld or fusion from a group, comprising at least spot welds and a strip welds and a combination of spot welds and strip welds. Then, the strip welds define a continuous line, and/or a dashed line. Spot welds may be arranged at discrete positions.

The partial welds may be arranged in an orientation from a group, comprising a helical direction in the winding direction, a helical direction opposite to the winding direction, and axial direction relative to the pipe's longitudinal directions, and a combination thereof.

The partial welds may circumferentially distributed evenly and/or unevenly.

Distribution or spacing between partial welds may be selected depending on at least one aspect from a group, comprising: a diameter of the pipe, and a width of the plastic tape, an increase in thickness of the reinforced plastic pipe due to application of successive plastic tape layers, and a combination thereof.

The innermost plastic tape layer may be welded over a full surface thereof to the plastic pipe.

Another aspect of the present disclosure relates to a method of manufacturing a reinforced plastic pipe, comprising: providing a plastic pipe; winding at least one inner plastic tape layer and a further plastic tape layer, of which the inner plastic tape layer comprises a wound inner plastic tape and the further plastic tape layer comprises at least one further plastic tape wound as an overlying layer onto the inner plastic tape layer; welding the inner plastic tape layer and the further plastic tape layer jointly to the pipe to define a jointly welded stack of the inner plastic tape layer and the further plastic tape layer, wherein the welding comprises partially and jointly welding the inner plastic tape layer and the further plastic tape layer with a partial weld relative to an inner contact surface thereof on either the plastic pipe or an innermost plastic tape layer wound onto the pipe under the inner tape layer.

The innermost plastic tape layer may be welded over a full surface thereof to the plastic pipe prior to winding the inner plastic tape layer thereon.

Based on the above indications of features of the present disclosure in terms of the appended claims, below an embodiment description is provided with reference to the appended drawing, where the scope of protection of the present disclosure according to the appended claims is by no means limited to any specific aspect or feature of the below discussed and in the drawing shown embodiments. Such exemplary embodiments are shown in the accompanying drawing, which shows distinct embodiments wherein the same or similar elements, components and/or aspects can be designated with the same or a similar reference numeral, and in which:
Figure 1 is a schematic and perspective view of a prior art RTP;
Figure 2-5 show embodiments of local welding or fusing according to the present disclosure;
Figure 6 show a schematic representation of an embodiment for machinery to implement the method and achieve any of the reinforced plastic pipes of figures 2-5, and
Figure 7 shows schematically a system of processing a core pipe for arranging a plurality of plastic tape layer subsequently thereon.

An RTP 5 according to the present disclosure has a plurality of tape layers 2, 3 of which only two tape layers 2, 3 ar shown in figures 2 - 5 for the sake of simplicity of the representations. Before the start of winding layers 2, 3 onto pipe 1, a fully welded innermost layer may be arranged on pipe 1. Once a stack of the tapes 2, 3 for forming tape layers is wound on the pipe 1, the stack is be spot welded at discrete positions 6 as shown in figure 2. Optionally, to even further limit heating of pipe 1, the positions 6 of weld spots may stagger over the outer surface of the formed stack, as shown in relation to tape layer 3, wherein the positions stagger over a distance of arrow B relative to neighbouring positions. Additionally or alternatively, positions 6 of spot welds in subsequently arranged tape layers 2, 3 may be circumferentially offset over a distance of arrow A relative to neighboring spot weld positions.

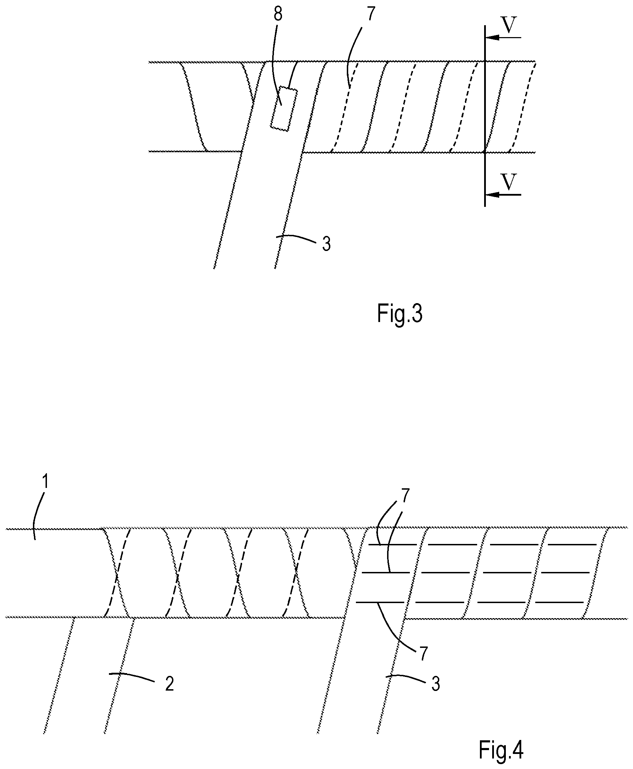

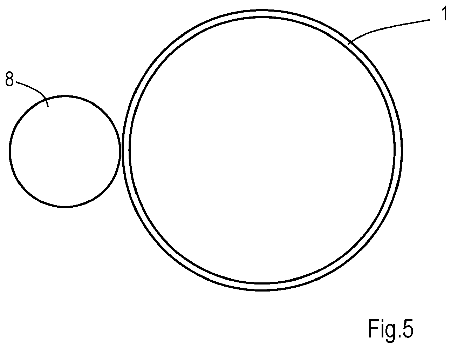

Figures 3 and 5 exhibit an embodiment with line or strip welds 7, formed with or by weld wheel 8. Figure 5 shows a view in the orientation V - V in figure 3, showing the orientation of the weld wheel 8 in a frontal view, for clarification. The strip welds 7 may extend in a spiraling and/or helical manner, as shown, over tape layer 3. Alternatively, the strip weld may spiral in an oriented opposite to the winding orientation of the tape forming the tape layer 3, to cross over boundaries of neighbouring tape windings. Additionally or alternatively, the strip welds may be axially linear over tape layer 3, as shown in figure 4. The strip welds may be applied in a linear or spiraling and continuous fashion over tape layer 3, or may be intermittently applied, as shown by dashed strip weld lines over tape layer 3 in figure 3, and the linear line or strip welds through both layers 2, 3 in figure 4 may also be intermittent dashed lines.

All combinations and permutations are considered included within the scope of protection according to the appended claims.

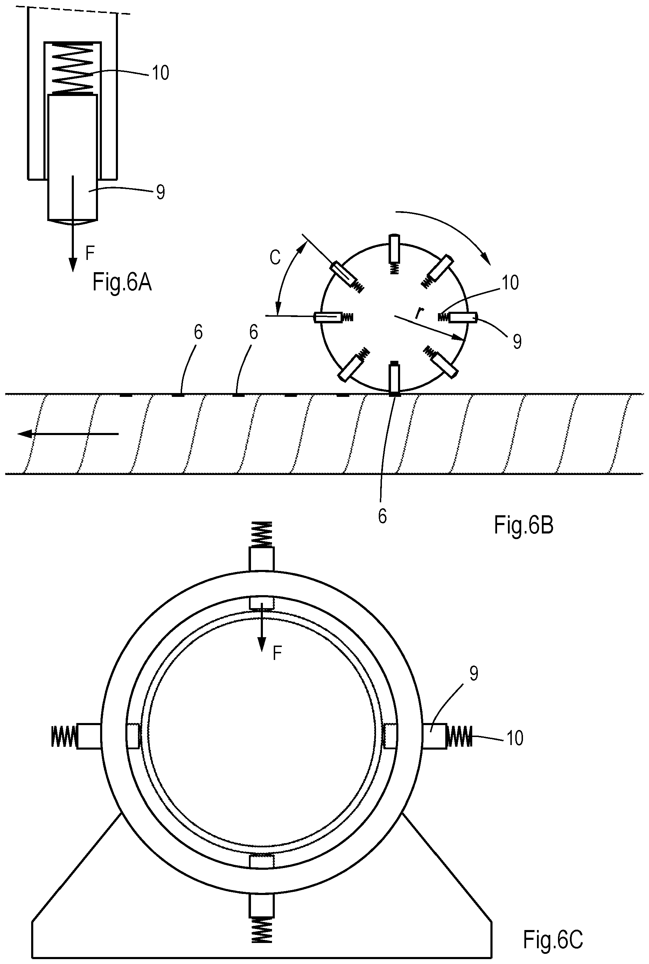

As indicated in relation to figure 3, weld wheels 8 may be employed, both for continuous and intermittent weld lines. When welding at positions 6, stamp like welding elements 9 in figure 6 may be deployed. Weld wheels 8 or weld elements 9 may be spring 10 loaded or biased to forcefully press stacked tape layers 2, 3 onto pipe 1 and any underlying innermost tape layer. Weld elements 10 and/or weld wheels 8 may me circumferentially distributed evenly (figure 6) or unevenly (as in figures 3, 5). With an even distribution of the weld elements 9, as in figure 6, distribution or spacing there between (arrow C in figure 6) may be selected to depend on the diameter of the pipe 1, and width of the tape, to achieve an optimum result.

As an alternative for staggering and/or offsetting spot weld points 6 or line-shaped strip welds 7, it is achieved that welds extend through the stack 2, 3 to ensure a connection to the pipe 1 through all superposed tape layers 2, 3.

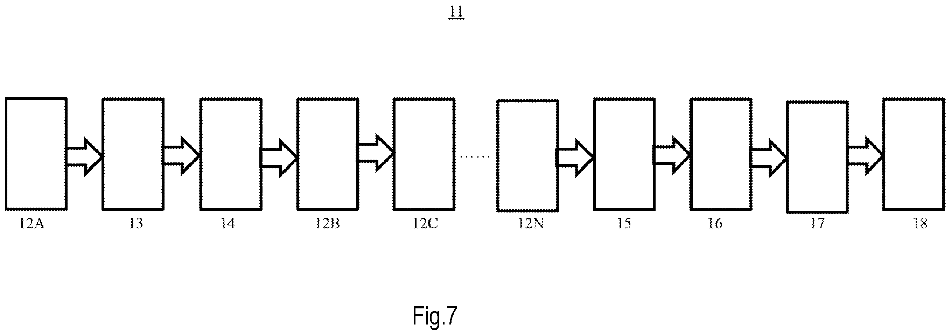

Figure 7 shows schematically a system 11 of processing a core pipe for arranging a plurality of plastic tape layers 2, 3 subsequently thereon. At winding station 12A, an innermost tape is helically wound onto a core pipe 1. The innermost tape is fully welded to pipe 1 at welding station 13. To prevent slipping of the first reinforced plastic tape layer, in particular if the outer surface liner of pipe 1 is relatively smooth, the first layer should be welded completely over the entire surface thereof onto the pipe 1. The assembled pipe 1 and fully thereon welded reinforced plastic tape layer are cooled at cooling station 14, to reduce the heat thereof, which may hamper or endanger subsequent winding and welding steps. In subsequent winding stations 12B - 12N, any desired number of reinforced plastic tape layers are helically wound one onto the other. The inner plastic tape layer 2 is arranged by the winding station 12B. Any of the subsequent winding stations 12C - 12N may be regarded as the one arranging the further reinforced plastic tape layer 3. When a desired number of tape layers 2, 3 is arranged, one on top of the other, the whole stack is spot or line welded, as shown in any of figures 2 - 5, at welding station 15. The advantage of the spotwelding at the end of the line, is the possibility to define the welding spots and thereby influencing the flexibility of the end product of the whole pipe. Subsequently, the intermediate product is heated at heating station 16 to enhance adhesion of a coating layer, which may be arranged on the outside by coating station 17. Then the end product may be coiled at coiling station 18, after which it can be shipped to a user at a destination.

It will be apparent that diverse additional and alternative embodiments will occur to the skilled person after the foregoing disclosure of details and features of the possible embodiments, shown specifically in the figures, to which the present disclosure is by no means limited, as the scope of protection for the present disclosure is defined in the appended claims, and in particular the independent claim.

## Claims

1. Reinforced plastic pipe, comprising a plastic pipe (1), optionally an innermost plastic tape layer, at least an inner tape layer (2) and a further tape layer (3), of which the inner tape layer (2) comprises a plastic tape wound on the pipe (1) or onto the innermost plastic tape layer, and the subsequently arranged further tape layer (3) comprises at least one further plastic tape, windingly layered on top of the inner tape layer (2), wherein the inner tape layer (2) and the further tape layer (3) comprise a joint partial weld relative to an inner contact surface thereof on either the plastic pipe (1) or the innermost plastic tape layer.

2. Reinforced plastic pipe according to claim 1, wherein the partial weld comprises at least one weld or fusion from a group, comprising at least spot welds and a strip welds and a combination of spot welds and strip welds.

3. Reinforced plastic pipe according to claim 2, wherein the strip welds define a continuous line.

4. Reinforced plastic pipe according to claim 2 or 3, wherein the strip welds define a dashed line.

5. Reinforced plastic pipe according to any of claims 2 - 4, wherein the spot welds are arranged at discrete positions.

6. Reinforced plastic pipe according to any of the preceding claims, wherein the partial welds are arranged in an orientation from a group, comprising a helical direction in the winding direction, a helical direction opposite to the winding direction, and axial direction relative to the pipe's longitudinal directions, and a combination thereof.

7. Reinforced plastic pipe according to any of the preceding claims, wherein the partial welds are circumferentially distributed evenly.

8. Reinforced plastic pipe according to any of the preceding claims, wherein the partial welds are circumferentially distributed unevenly.

9. Reinforced plastic pipe according to any of the preceding claims, wherein distribution or spacing between partial welds is selected depending on at least one aspect from a group, comprising: a diameter of the pipe (1), and a width of the plastic tape, an increase in thickness of the reinforced plastic pipe due to application of successive plastic tape layers, and a combination thereof.

10. Reinforced plastic pipe according to any of the preceding claims, wherein the innermost plastic tape layer is welded over full surface thereof to the plastic pipe (1).

11. A method of manufacturing a reinforced plastic pipe, comprising:
- providing a plastic pipe (1);
- winding at least one inner plastic tape layer (2) and a further plastic tape layer (3), of which the inner plastic tape layer (2) comprises a wound inner plastic tape and the further plastic tape layer (3) comprises at least one further plastic tape wound as an overlying layer onto the inner plastic tape layer (2);
- welding the inner plastic tape layer (2) and the further plastic tape layer (3) jointly to the pipe (1) to define a jointly welded stack of the inner plastic tape layer (2) and the further plastic tape layer (3),
wherein the welding comprises partially and jointly welding the inner plastic tape layer (2) and the further plastic tape layer (3) with a partial weld relative to an inner contact surface thereof on either the plastic pipe (1) or an innermost plastic tape layer wound onto the pipe (1) under the inner tape layer (2).

12. Method as in claim 11, comprising full surface welding of the innermost plastic tape layer to the plastic pipe (1) prior to winding the inner plastic tape layer (2) thereon.

## Patentansprüche

1. Verstärktes Kunststoffrohr, mit einem Kunststoffrohr (1), wahlweise einer innersten Kunststoffbandschicht, mindestens einer inneren Bandschicht (2) und einer weiteren Bandschicht (3), von welchen die innere Bandschicht (2) ein auf das Rohr (1) oder auf die innerste Kunststoffbandschicht gewickeltes Kunststoffband aufweist, und die anschließend angeordnete weitere Bandschicht (3) mindestens ein weiteres Kunststoffband in gewickelten Schichten oben auf der inneren Bandschicht (2) aufweist, wobei die innere Bandschicht (2) und die weitere Bandschicht (3) eine gemeinsame Teilschweißnaht bezüglich einer inneren Kontaktfläche derselben entweder auf dem Kunststoffrohr (1) oder auf der innersten Kunststoffbandschicht aufweisen.

2. Verstärktes Kunststoffrohr nach Anspruch 1, wobei die Teilschweißnaht mindestens eine Schweißnaht oder Verschmelzung aus einer Gruppe aufweist, die zumindest Punktschweißnähte und Bandschweißnähte sowie eine Kombination aus Punktschweißnähten und Bandschweißnähten aufweist.

3. Verstärktes Kunststoffrohr nach Anspruch 2, wobei die Bandschweißnähte eine durchgehende Linie definieren.

4. Verstärktes Kunststoffrohr nach Anspruch 2 oder 3, wobei die Bandschweißnähte eine gestrichelte Linie definieren.

5. Verstärktes Kunststoffrohr nach einem der Ansprüche 2 bis 4, wobei die Punktschweißnähte an diskreten Positionen angeordnet sind.

6. Verstärktes Kunststoffrohr nach einem der vorhergehenden Ansprüche, wobei die Teilschweißnähte in einer Ausrichtung aus einer Gruppe angeordnet sind, die eine spiralförmige Richtung in der Wicklungsrichtung, eine spiralförmige Richtung entgegengesetzt zur Wicklungsrichtung und eine axiale Richtung bezüglich der Längsrichtungen des Rohres sowie eine Kombination aus diesen aufweist.

7. Verstärktes Kunststoffrohr nach einem der vorhergehenden Ansprüche, wobei die Teilschweißnähte gleichmäßig über den Umfang verteilt sind.

8. Verstärktes Kunststoffrohr nach einem der vorhergehenden Ansprüche, wobei die Teilschweißnähte ungleichmäßig über den Umfang verteilt sind.

9. Verstärktes Kunststoffrohr nach einem der vorhergehenden Ansprüche, wobei eine Verteilung oder ein Abstand zwischen Teilschweißnähten in Abhängigkeit mindestens eines Aspekts aus einer Gruppe ausgewählt wird, die folgendes aufweist: einen Durchmesser des Rohres (1) und eine Breite des Kunststoffbandes, eine Erhöhung der Dicke des verstärkten Kunststoffrohres aufgrund der Aufbringung von aufeinanderfolgenden Kunststoffbandschichten sowie eine Kombination aus diesen.

10. Verstärktes Kunststoffrohr nach einem der vorhergehenden Ansprüche, wobei die innerste Kunststoffbandschicht über deren gesamte Fläche mit dem Kunststoffrohr (1) verschweißt wird.

11. Ein Verfahren zur Herstellung eines verstärkten Kunststoffrohres mit den Schritten:
- Bereitstellen eines Kunststoffrohres (1);
- Wickeln von mindestens einer inneren Kunststoffbandschicht (2) und einer weiteren Kunststoffbandschicht (3), von welchen die innere Kunststoffbandschicht (2) ein gewickeltes inneres Kunststoffband aufweist und die weitere Kunststoffbandschicht (3) mindestens ein weiteres Kunststoffband aufweist, das als darüberliegende Schicht auf die innere Kunststoffbandschicht (2) gewickelt wird;
- Verschweißen der inneren Kunststoffbandschicht (2) und der weiteren Kunststoffbandschicht (3) gemeinsam mit dem Rohr (1), um einen gemeinsam verschweißten Stapel aus der inneren Kunststoffbandschicht (2) und der weiteren Kunststoffbandschicht (3) zu definieren,
wobei das Verschweißen ein teilweises und gemeinsames Verschweißen der inneren Kunststoffbandschicht (2) und der weiteren Kunststoffbandschicht (3) mit einer Teilschweißnaht bezüglich einer inneren Kontaktfläche derselben entweder auf dem Kunststoffrohr (1) oder auf einer innersten Kunststoffbandschicht aufweist, die unter der inneren Bandschicht (2) auf das Rohr (1) gewickelt wird.

12. Verfahren nach Anspruch 11, mit flächiger Verschweißung der innersten Kunststoffbandschicht mit dem Kunststoffrohr (1), bevor die innere Kunststoffbandschicht (2) darauf gewickelt wird.

## Revendications

1. Tuyauterie en matière plastique renforcée, comprenant une tuyauterie en matière plastique (1), en variante, une couche en bande de matière plastique la plus à l'intérieur, au moins une couche en bande interne (2) et une couche en bande supplémentaire (3), parmi lesquelles la couche en bande interne (2) comprend une bande de matière plastique enroulée sur la tuyauterie (1) ou sur la couche en bande de matière plastique la plus à l'intérieur, et la couche en bande supplémentaire (3) agencée ultérieurement comprend au moins une bande de matière plastique supplémentaire, agencée par enroulement au-dessus de la couche en bande interne (2), dans laquelle la couche en bande interne (2) et la couche en bande supplémentaire (3) comprennent une soudure partielle de jonction par rapport à leur surface de contact interne, soit sur la tuyauterie en matière plastique (1) soit sur la couche en bande de matière plastique la plus à l'intérieur.

2. Tuyauterie en matière plastique renforcée selon la revendication 1, dans laquelle la soudure partielle comprend au moins une soudure ou zone de fusion à partir d'un groupe, comprenant au moins des soudures en point et des soudures en bande et une combinaison de soudures en point et de soudures en bande.

3. Tuyauterie en matière plastique renforcée selon la revendication 2, dans laquelle les soudures en bande définissent une ligne continue.

4. Tuyauterie en matière plastique renforcée selon la revendication 2 ou 3, dans laquelle les soudures en bande définissent une ligne discontinue.

5. Tuyauterie en matière plastique renforcée selon l'une quelconque des revendications 2 à 4, dans laquelle les soudures en point sont agencées à des positions discrètes.

6. Tuyauterie en matière plastique renforcée selon l'une quelconque des revendications précédentes, dans laquelle les soudures partielles sont agencées suivant une orientation à partir d'un groupe, comprenant une direction hélicoïdale suivant la direction d'enroulement, une direction hélicoïdale opposée à la direction d'enroulement et une direction axiale par rapport aux directions longitudinales de la tuyauterie et une combinaison de celles-ci.

7. Tuyauterie en matière plastique renforcée selon l'une quelconque des revendications précédentes, dans laquelle les soudures partielles sont réparties circonférentiellement de manière uniforme.

8. Tuyauterie en matière plastique renforcée selon l'une quelconque des revendications précédentes, dans laquelle les soudures partielles sont réparties circonférentiellement de manière non uniforme.

9. Tuyauterie en matière plastique renforcée selon l'une quelconque des revendications précédentes, dans laquelle la distribution ou l'espacement entre les soudures partielles est sélectionné en fonction d'au moins un aspect à partir d'un groupe comprenant : un diamètre de la tuyauterie (1) et une largeur de la bande de matière plastique, une augmentation d'épaisseur de la tuyauterie en matière plastique renforcée due à l'application de couches en bande de matière plastique successives et une combinaison de ceux-ci.

10. Tuyauterie en matière plastique renforcée selon l'une quelconque des revendications précédentes, dans laquelle la couche en bande de matière plastique la plus à l'intérieur est soudée sur la totalité de sa surface surface sur la tuyauterie en matière plastique (1).

11. Procédé de fabrication d'une tuyauterie en matière plastique renforcée, comprenant :
la fourniture d'une tuyauterie en matière plastique (1) ;
l'enroulement d'au moins une première couche en bande de matière plastique (2) et d'une couche en bande de matière plastique supplémentaire (3), parmi lesquelles la couche en bande de matière plastique interne (2) comprend une bande de matière plastique interne enroulée et la couche en bande de matière plastique supplémentaire (3) comprend au moins une bande de matière plastique supplémentaire enroulée comme une couche de revêtement sur la couche en bande de matière plastique interne (2) ;
le soudage de la couche en bande de matière plastique interne (2) et de la couche en bande de matière plastique supplémentaire (3) de manière jointive sur la tuyauterie (1) afin de définir un empilement soudé de manière jointive de la couche en bande de matière plastique interne (2) et de la couche en bande de matière plastique supplémentaire (3),
dans lequel le soudage comprend le soudage partiel et jointif de la couche en bande de matière plastique interne (2) et de la couche en bande de matière plastique supplémentaire (3) avec une soudure partielle par rapport à une surface de contact interne de celles-ci à la fois sur la tuyauterie en matière plastique (1) ou une couche en bande de matière plastique la plus à l'intérieur enroulée sur la tuyauterie (1) au-dessous de la couche en bande interne (2).

12. Procédé selon la revendication 11, comprenant le soudage sur la totalité de la surface de la couche en bande de matière plastique la plus à l'intérieur sur la tuyauterie en matière plastique (1) avant d'enroulement de la couche en bande de matière plastique interne (2) sur cette dernière.
